# EUROPEAN PATENT SPECIFICATION

(11) **EP 0 706 179 B1**
(45) Date of publication and mention of the grant of the patent: **11.12.2002**
(21) Application number: 95306732.9
(22) Date of filing: 25.09.1995
(51) Int. Cl.: G11B 7/26, G11B 7/24

(54) **Production process of optical information recording medium and production apparatus therefor**
Verfahren zur Herstellung eines optischen Informationsaufzeichnungsmediums und Gerät dazu
Procédé de fabrication d'un milieu d'enregistrement optique d'information et son appareil de fabrication

(30) Priority: 27.09.1994 JP 23103594; 28.09.1994 JP 23289694; 28.09.1994 JP 23382994; 28.09.1994 JP 23383094; 30.09.1994 JP 23674894
(43) Date of publication of application: 10.04.1996
(60) Divisional application: 00200335.8
(73) Proprietor: Matsushita Electric Industrial Co., Ltd., Kadoma-shi, Osaka 571 (JP)
(72) Inventor: Yamada, Noboru, Hirakata-shi, Osaka 573 (JP); Kawahara, Katsumi, Kadoma-shi, Osaka 571 (JP); Furukawa, Shigeaki, Shiki-gun, Nara 636-03 (JP)
(74) Representative: Evans, Claire

(56) References cited:
- EP-A- 0 180 103
- EP-A- 0 234 588
- EP-A- 0 288 354
- EP-A- 0 419 295
- DE-A- 4 203 590
- GB-A- 2 004 404
- GB-A- 2 017 379
- US-A- 4 917 751
- PATENT ABSTRACTS OF JAPAN vol. 015, no. 172 (P-1197), 30 April 1991 & JP-A-03 035424 (HITACHI LTD), 15 February 1991,
- PATENT ABSTRACTS OF JAPAN vol. 014, no. 508 (P-1128), 7 November 1990 & JP-A-02 210631 (HITACHI LTD), 22 August 1990,
- PATENT ABSTRACTS OF JAPAN vol. 014, no. 183 (P-1035), 12 April 1990 & JP-A-02 029953 (NEC CORP), 31 January 1990,
- PATENT ABSTRACTS OF JAPAN vol. 013, no. 345 (P-909), 3 August 1989 & JP-A-01 102754 (HITACHI LTD), 20 April 1989,

## Description

The present invention relates to optical information recording media comprising a recording thin film layer on a substrate with phase transition between the crystal phase and the amorphous phase by laser beam irradiation and a production process for such media.

As conventional phase transition optical information recording media, substrates of disk type, card type, sheet type or film type having a chalcogenide thin film including Te or Se as the main component such as Ge-Sb-Te and In-Se, or a semimetal thin film formed thereon as the information recording layer are known. In phase transition light recording, for example, instant irradiation of a laser beam focused on a light spot of submicron order size to the above mentioned recording thin film layer comprising a phase transition material raises the local temperature of the irradiated region to change the atomic distribution thereof. If the temperature of the irradiated region reaches the crystallization temperature or over, the minute region comes into the crystal state, and if the temperature of the irradiated region reaches the melting point or over, the minute region comes into the amorphous phase. If each of the amorphous phase and the crystal phase is determined to be the recorded state and the erased state (or unrecorded state) or vice versa, recording and erasure of information can be conducted reversibly. Since the optical characteristics of the crystal phase and the amorphous phase are different in such a recording thin film layer, the signal can be reproduced by detecting the difference of the characteristics by an optical means.

In addition to the method of using the phase transition between the amorphous phase and the crystal phase, another example of applying the phase transition of a substance to information recording is the method of using the phase transition between the high temperature phase and the low temperature phase in the crystal state. It is known that the procedure can be conducted similarly with the high temperature phase as the amorphous phase and the low temperature phase as the crystal phase.

In general, since recording is conducted from the crystal phase to the amorphous phase in the above mentioned optical information recording media using phase transition between the amorphous phase and the crystal phase as the premise, the phase of the recording thin film should be converted to the crystal phase in advance. This operation is called initialization.

As a method of initialization, serial processing methods using a laser beam, as disclosed in the official gazette of the Japanese Patent Application Laid Open No.106031/1985, are practically used. That is, a light spot of from several tens to several hundreds µm is formed by means of a laser beam with the output far greater than that of a laser diode for recording and reproduction. By irradiating the light spot with a medium forwarding at a constant speed, many tracks can be crystallized in a single operation. This method has good points in the respect that since the medium is heated in a small area at a time, thermal load is small and the medium is unlikely to crack. But this method also has the disadvantage that initialization takes a long time.

On the other hand, a method of crystallizing the disk surface collectively by means of a flash of light is also used. For example, this method is advocated in the official gazette of the Japanese Patent Application Laid Open No. 250533/1987. The method of conducting initialization by forming a recording film having phase transition characteristics between the crystalline and the amorphous states (for example, a recording layer of Te₉₀Ge₁₀ having 70 nm thickness sandwiched by SiO₂ layers having 100 nm thickness) on an organic substrate (acrylic resin) is disclosed in the official gazette. The official gazette discloses that a xenon flash was used as the light source and a reflecting mirror was used. The exposure time was from 1 µs to 1 ms, and irradiation of 1 MW output was conducted for 500 µs (energy was 500 J).

A method of forming a medium with double sides structure by affixing media with single side structure with an ultraviolet ray curing resin layer as the adhesion layer is disclosed in the official gazette of the Japanese Patent Application Laid Open No. 275057/1988. However, in the method disclosed therein an ultraviolet ray is irradiated to the disk surface from the horizontal direction so as to facilitate curing the resin, therefore the method is different from the method of the present invention which is commonly used to affix media by irradiating an ultraviolet ray to the disk surface from the vertical direction. The method used in the above mentioned conventional art is to irradiate an ultraviolet ray from the section of the media at which the resin layer is exposed. Therefore there are problems such as difficulty of improving irradiation efficiency and the need of a plurality of the ultraviolet ray irradiating light source.

The reason why an ultraviolet ray curing resin is not used as the adhesive in the production process of a substrate with double sides structure is as follows. That is, since phase transition type optical disks as well as magneto-optical disks have a metal reflecting layer, an ultraviolet ray to cure the ultraviolet ray curing resin can barely penetrate from the substrate side. Namely, since an ultraviolet ray irradiation can not reach the adhesive layer, it is difficult to cure the ultraviolet ray curing resin layer. The above mentioned conventional art has no disclosure of a method to solve the fundamental problem.

GB-A-200 4404 discloses a double sided disc with an UV-curable resin between the recording layers. The curable layer is cured through one of the recording layers. In this document the layers are read-only layers with a metallic recording layer.

An object of the present invention is to provide a structure of an optical information recording medium to reduce the number of production steps of a medium with double sides structure suitable to a flash initialization method, and a production process of the optical information recording medium.

In order to achieve the above-mentioned object, the present invention has a structure having two pieces of optical information recording materials comprising a recording thin film layer which has optically detectable changes by laser beam irradiation on a transparent substrate, affixed with the multi-layered structure film side butted together by means of a resin including an ultraviolet ray sensitive curing component. In addition, at least one of the two optical information recording materials has a transmissivity of about 3 % or more in the ultraviolet ray sensitive wavelength range of the resin. By having the above mentioned structure, the adhesion layer can be cured by ultraviolet ray irradiation from outside from the substrate side.

In this case when recording thin film layers using the change of optical characteristics of phase transition between the amorphous phase and the crystal phase are used and at least one of the optical information recording materials of the above mentioned recording thin film layers is in the amorphous state, it is preferable that the resin has approximately 3 % or more of transmissivity in the ultraviolet ray sensitive wavelength range.

It is further preferable that an alloy comprising Au as the main component described by the formula : Au₁₀₀₋ₓMₓ, wherein M is a metal element such as Cr, Al, Ag, Cu, Ni, Si, Pt, and 100 > x ≧ 0 is used as the metalic reflection layer.

Such optical information recording media can be obtained in a production process comprising, a film forming process in which the multi layered structure film of at least one of the above mentioned two optical information recording materials is formed with the ultraviolet ray sensitive wavelength range of the resin having approximately 3 % or more of transmissivity, a positioning process in which the above mentioned two optical information recording materials are positioned with the surface having the multi layered structure film thereon opposing to each other, a filling process in which the above mentioned resin is filled to the space between the above mentioned opposing multi layered structure films, and an exposure process in which the above mentioned resin is cured with the exposure to the ultraviolet ray.

In general, the curing speed of an ultraviolet ray sensitive resin depends on factors such as wavelength of the ultraviolet ray irradiation and quantum efficiency of the sensitive component, which is proportional to the ultraviolet ray irradiation intensity. However, according to the results of experiments conducted by the inventors of this invention showed that the rate determining step for curing by the ultraviolet ray irradiation, although the curing speed is subject to slight change according to the irradiation intensity, depends mainly on the wavelength of the ultraviolet ray. That is, it was found that if a specific wavelength to react the component which starts polymerization by ultraviolet ray irradiation exists, even if the transmissivity is as high as 3 %, the irradiation intensity to the ultraviolet ray irradiation sensitive component is sufficient and the effect on the curing speed is not much. Therefore, in the above mentioned structure, since an optical information recording medium with double sides structure can be formed by only filling an ultraviolet ray curing resin in the space between the surfaces of the two disks to be bonded and irradiating the ultraviolet ray, the number of steps of the production process can be reduced remarkably compared with conventional methods.

Herein it is preferable that the exposure is provided from the both sides of the optical information recording materials.

It is further preferable that the optical information recording medium is initialized by irradiating an energy line after exposure process.

It is further preferable that a laser beam is used as the energy line.

It is further preferable that a flash light is used as the energy line.

It is further preferable that at least one of the two optical information recording materials is a type used only for reproduction.

FIG. 1 is a section view of an embodiment of a double sides structure optical information recording medium formed with an ultraviolet ray curing resin as an adhesion layer.

FIG. 2 is a flow chart of an embodiment of a production process for a double sides structure optical information recording medium of the present invention.

Hereinafter preferred embodiments of the present invention will be further explained with reference to drawings.

An embodiment of the present invention, namely examples of media with double sides structure produced in a reduced number of production steps and the production process will be explained.

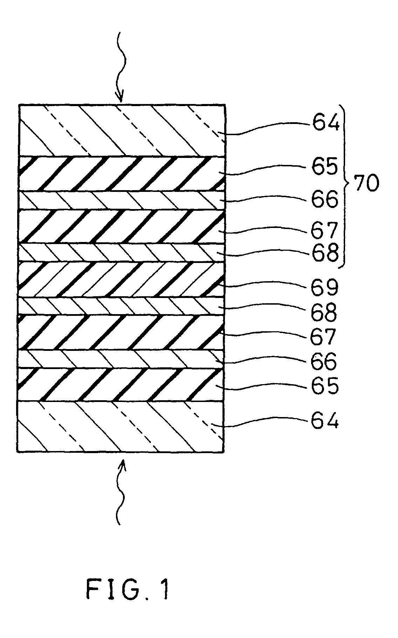

FIG. 1 is a section view to show an embodiment of an optical information recording medium with double sides structure of the present invention. In this embodiment, on a polycarbonate with 1.2 mm thickness as the transparent susbstrate 64, a ZnS-SiO₂ film with 90 nm thickness as the first dielectric layer 65, a Ge₂Sb₂Te₅ alloy thin film layer with 30 nm thickness as the recording thin film layer 66, a ZnS-SiO₂ film with 154 nm thickness as the second dielectric layer and an Au thin film layer with 10 nm thickness as the metal reflecting layer 68 were laminated by sputtering to form the optical information recording material 70 with single side structure. Two pieces of the optical information recording materials 70 were butted to each other with the film sides inside and affixed with a resin containing the ultraviolet ray sensitive component (hereinafter abbreviated "ultraviolet ray curing resin") to form the adhesive layer 69.

The transmissivity of the above mentioned optical information recording material with single side structure was about 5 % in the vicinity of the wavelength of the mercury lamp (250 to 30 nm) used in the curing treatment of the ultraviolet ray curing resin.

As to the material of the transparent substrate 64, in addition to the above mentioned polycarbonate, materials such as poly methyl methacrylate (PMMA) and glass can be used. As to the material of the first dielectric layer and the second dielectric layer, in addition to the above mentioned ZnS-SiO₂, material such as oxide dielectrics such as SiO₂ and Ta₂O₅, nitrides such as SiN and AlN can be used. As to the material of the recording thin film layer 66, phase transition materials of In-Sb-Te system can be used. There is no limitation for materials of the optical information recording media with double sides structure of the present invention.

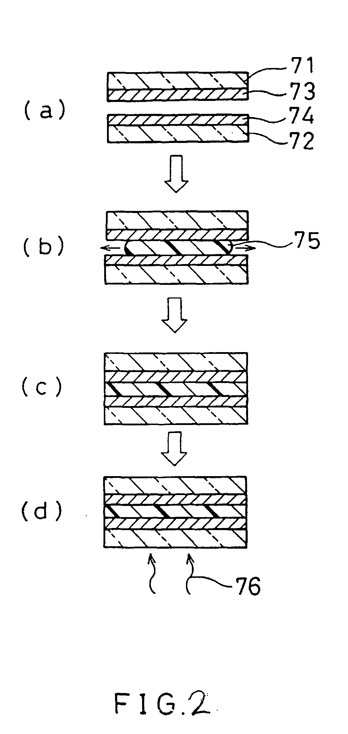

FIG. 2 is a flow chart of the affixing process of the optical information recording medium with double sides structure of an embodiment of the present invention. On the transparent substrates 71, 72 of polycarbonate, thin films 73, 74 formed in a multi-layer to form a recording layer and the optical information recording material 70 is comprised.

First, as illustrated in the process (a), the substrate 71 and the substrate 72 are opposed with the surfaces on which the thin film 73 and the thin film 74 are formed inside. The space between the thin film 73 and the thin film 74 can be provided optionally but about 3 mm would be appropriate. Second, as illustrated in the process (b), the ultraviolet ray curing resin 75 is filled in the space provided. After filling, the substrate 71 and the substrate 72 are put closely. Then as illustrated in the process (c), the ultraviolet ray curing resin 75 extends to the whole surface of the thin films 73, 74. In addition to the above mentioned method of putting the substrates closely, if the substrates 71 and 72 are rotated, even application of the ultraviolet ray curing resin can be facilitated, and thus it is preferable. After applying the ultraviolet ray curing resin 75 evenly as illustrated in the process (c), the ultraviolet ray 76 is irradiated from the substrate 72 side and about 5 % of the irradiated ultraviolet ray 76 reach the ultraviolet ray curing resin 75 to cure the ultraviolet ray curing resin as illustrated in the process (d). By the above mentioned processes, the substrate 71 and the substrate 72 are unified to produce the optical information recording medium with double sides structure.

Although an example of irradiating the ultraviolet ray from one side (substrate 72 side) of the optical information recording medium, the irradiation may be conducted from both of transparent substrate 71, 72 sides. In this case, since the curing of the ultraviolet ray curing resin 75 is facilitated from both sides, it allows affixing the optical information recording medium with double sides structure in an even shorter time.

The ultraviolet ray transmissivity of the optical information recording medium of the optical information recording medium of the present invention depends upon the material and the film thickness of the metal reflecting layer either in the case with the structure having only the recording thin film layer and the metal reflecting layer, or in the case with the structure having the recording layer sandwiched by two dielectric layers one of which having a metal reflecting layer as illustrated in FIG. 1. Therefore by controlling mainly the material of the metal reflecting layer and the film formation of the reflecting layer, the ultraviolet ray transmissivity of the sensitive wavelength region, an important point in the present invention, can be set.

As to the materials of the metal reflecting layer, pure metal materials including Al, Cr Ag, Cu, Ni and Au, and alloy material containing other metal material can be used. In order to achieve the purpose of the present invention, any material with approximately less than 20 nm to 50 nm thickness can be used. In particular, Au or an alloy containing Au as the principal component, namely Au_{100-X}M_{X} (100 > x ≧ 0, M : metal element comprising the alloy) is preferable with respect to both reflecting ratio and the transmissivity of the ultraviolet ray.

As mentioned above, although the material and/or the film thickness of the metal reflecting layer is the main element, there is some contribution of the film thickness of the substrate and the film thickness of the dielectric layer, therefore sometimes it may be necessary to adjust the film thickness of the layers according to the materials used. In general, if the transmissivity is 3 % or more in the ultraviolet ray wavelength region is sufficient.

However, in the case of applying the change of optical characteristics from the amorphous phase to the crystal phase of the recording thin film layer, since the recording thin film layer is in the amorphous phase in general at the time of forming the recording thin film layer, the ultraviolet ray transmissivity of the recording thin film layer in the amorphous state needs to be approximately 3 % or more in advance.

Then the transmissivity and the curing degree of the ultraviolet ray curing resin of the optical information recording medium with double sides structure affixed by the the above mentioned process were evaluated. The ultraviolet ray transmissivity of the optical information recording media with the double sides structure were prepared 0 %, 1 %, 2 %, 3 %, and 5 % respectively by changing the film structure of the thin films 73 and 74.

The structure of the thin films 73, 74 of the optical information recording medium with double sides structure having 0 % transmissivity was formed by applying a ZnS-SiO₂ (SiO₂ : 20 mole %) film of 70 nm thickness, a Ge₂Sb₂Te₅ alloy thin film with 25 nm thickness, a ZnS-SiO₂ (SiO₂ : 20 mole %) film with 45 nm thickness and an AlCr (Cr : 3 atomic %) of 90 nm thickness on transparent substrates 71, 72 respectively.

The structures of the thin films 73, 74 of the optical information recording media with double sides structure having 1 %, 2 %, 3 % and 5 % transmissivity were formed by applying a ZnS-SiO₂ (SiO₂ : 20 mole %) film of 92 nm thickness, a Ge₂Sb₂Te₅ alloy thin film with about 20-40 nm thickness, a ZnS-SiO₂ (SiO₂ : 20 mole %) film with 160 nm thickness and an Au film of about 5-30 nm thickness on transparent substrates 71, 72 respectively. And by adjusting the film thicknesses of the alloy thin film and the Au reflecting layer, transmissivities were adjusted. Results are shown in the Table.

**Table**

| Ultraviolet ray transmissivity and curing characteristics by ultraviolet ray irradiation of media | | |
|---|---|---|
| Transmissivity | Curing characteristics | Results |
| 0 % | not cured | × |
| 1 % | partially cured (> 10 min) | × |
| 2 % | cured about 10 min | Δ |
| 3 % | cured 4-5 min (about 2 min in both sides irradiation) | ○ |
| 5 % | cured within 1 min | ⓞ |

As shown in the Table, although ultraviolet ray irradiation was conducted to affix the optical information recording medium with double sides structure with 0 % transmissivity, the ultraviolet ray curing resin was not cured.

Then ultraviolet ray irradiation was conducted to affix the optical information recording medium with double sides structure with 1 % transmissivity and only a part of the ultraviolet ray curing resin was cured. Even after 10 minute continuous ultraviolet ray irradiation the curing was not facilitated and remained insufficient. Also the ultraviolet ray irradiation was conducted to affix the optical information recording medium with double sides structure with 2 % transmissivity although the ultraviolet ray curing resin was cured it took about 10 minutes irradiation time. The curing time is not satisfactory since the current production of the optical information recording media requires through-put time of about 2-3 minutes.

On the other hand, ultraviolet ray irradiation was conducted to affix the optical information recording medium with double sides structure with 3 % transmissivity and the ultraviolet ray curing resin was cured in about 4-5 minutes. Further, with the ultraviolet ray irradiation from both sides of the optical information recording medium with double sides structure, the ultraviolet ray curing resin was cured in about 2 minutes.

Finally, ultraviolet ray irradiation was conducted to affix the optical information recording medium with double sides structure with 5 % transmissivity from one side and the ultraviolet ray curing resin was cured within only 1 minutes.

From the above mentioned results, the recommendable figure of the ultraviolet ray transmissivity of the thin films 73, 74 in affixing the optical information recording medium with double sides structure with an ultraviolet ray curing resin is 3 % or more with respect to the curing degree and the throught-put time.

The affixing strength of the optical information recording media with double sides structure so produced were evaluated. The evaluation was conducted by drop test and in the environment of high temperature and high humidity. The drop test was conducted by inserting an optical information recording medium with double sides structure in a cartridge used in recording and reproduction of the recording medium and dropping the cartridge from 75 cm above the concrete surface for six times. As a result, the optical information recording media with 3 % transmissivity and 5 % transmissivity had no damage such as partial peel off of the affixed part. The medium with 2 % transmissivity had no damage until the fourth time but suffered a partial peel off at the fifth time.

Further, optical information recording media with double sides structure were left in the atmosphere of 80 °C, 80 % RH for 300 hours and examined. The optical information recording media with both sides structure having 3 % transmissivity and 5 % transmissivity had no peeling off of the affixed part or crack. The medium with 2 % transmissivity had no damage until after 100 hours but suffered a partial peel off after 300 hours.

In the Table the mark ⓞ denotes excellent characteristics, the mark ○ denotes good characteristics, and the mark × denotes insufficient for practical use, and the mark Δ denotes the characteristics therebetween and may be applied for practical use according to conditions.

Next the produced optical information recording media with double sides structure were initialized. Since in the phase transition optical information recording media between the amorphous phase and the crystal phase in general recording is conducted from the crystal phase to the amorphous phase, as a premise of recording, the recording thin film needs to be converted to the crystal phase in advance, and this procedure is called initialization.

As the initialization method, two methods already explained were used. That is, a consecutive treatment method using a laser beam disclosed in the official gazette of the Japanese Patent Application Laid Open No. 106031/1985 was conducted. By using a laser of an output far larger than that of the laser diode used in recording and reproduction, a light spot of several tens to several hundreds µm width was formed. By irradiating the light spot with a medium passing at a constant rate, many tracks can be crystallized at one time.

Also a flash light method to crystallize the whole portion of the disk surface collective in a short time by means of the xenon lamp disclosed in the official gazette of the Japanese Patent Application Laid Open No. 250533/1987 was conducted.

After initialization by the above mentioned two kinds of processes, optical information recording media with double sides structure affixed with a hot melt adhesive conventionally used, and optical information recording media with double sides structure affixed with an ultraviolet ray curing resin illustrated in FIG. 1 were compared with respect to the state of the initialization.

Disks initialized by a laser beam either affixed with an ultraviolet ray curing resin or a hot melt adhesive were initialized preferably without suffering damages such as crack, flaw or peeling off.

A disk affixed with a hot melt adhesive and initialized by a flash light had a slight peeling off, wrinkle and crack in several portions but an optical information recording medium with both sides structure of the present invention illustrated in FIG. 1 had no damages such as flaw, crack and peeling off.

Then the optical information recording medium with double sides structure illustrated in FIG. 1 after initialization was put in a recording and reproduction apparatus for recording and reproduction evaluation. The disk was driven at the linear velocity of 27 m/s, and a laser of 780 nm wavelength (numeral aperture : NA=0.55) was binarily modulated with the peak power of 24 mW and the bias power of 12 mW and a signal with the recording frequency fl=18 MHz and a signal with the recording frequency f2=6.75 MHz were recorded by overwriting alternately.

The carrier and noise ratio (hereinafter abbreviated "C/N") and the erasure ratio of fl were measured and it was learned that the C/N was 52 dB and the erasure ratio was 26 dB and thus the initialization was conducted successfully. And further overwriting recording was conducted repeatedly to find the initial signal quality to be maintained without deterioration of the C/N or the erasure ratio.

As mentioned above, the present invention provides optical information recording media with double sides structure produced in a short time with fewer production steps by applying an ultraviolet ray curing resin as the material of the adhesion layer, having the recording medium with a multi-layered structure, selecting the film thickness of each layer to provide a transmissivity of about 3 % or more in the sensitive light wavelength of the ultraviolet ray curing resin and irradiating an ultraviolet ray.

Although the case using two pieces of the same optical information recording media affixed together was explained in the above mentioned embodiment, since the essence of the present invention can be achieved as long as at least one of the optical information recording materials has an ultraviolet ray transmissivity of about 3 % or more, one of the optical information recording materials of an optical information recording media with double sides structure may be one only for reproduction such as a CD, LD and a CD-ROM. Further, one of optical information recording materials may comprise only a recording thin film layer and a metal reflecting layer. Embodiments having different materials and/or film thicknesses of each layer of the two optical information recording materials, namely, materials dielectric layer, recording thin film layer, and metal reflecting layer may be used as well.

Resins at least containing an ultraviolet ray sensitive curing component may be used to affix optical information recording materials in the present invention. That is, effects of the present invention can be provided if an ultraviolet ray sensitive curing component is mixed in a conventional hot melt adhesive and used.

## Claims

1. An optical information recording medium comprising two optical information recording materials, each comprising a multi-layered film which comprises two optical absorptive layers of
(i) a recording thin film layer of less than 20 nm in thickness which exhibits a transition optically detectable by a laser irradiation and
(ii) a metal reflecting layer of less than 20 nm in thickness on a transparent substrate,
affixed together with the multi-layered films opposed to each other by means of a resin containing an element sensitive to an ultraviolet ray to be cured, at least one of the two optical information recording materials having a transmissivity of about 3% or more in the ultraviolet ray sensitive wavelength range of the resin.

2. The optical information recording medium according to claim 1, wherein the recording thin film layer utilizes the change of the optical characteristics according to the phase transition between the amorphous phase and the crystal phase, and when the recording thin film layer of at least one of the two optical information recording materials is in the amorphous state, the transmissivity in the ultraviolet ray sensitive wavelength of the resin is about 3% or more.

3. The optical information recording medium according to claim 1, wherein the metal reflecting layer is an allot Au₁₀₀₋ₓMₓ (M : metal element, 100 > X ≥ 0) comprising Au as the main component.

4. A production process for an optical information recording medium comprising a step of affixing two pieces of optical information recording materials comprising a recording thin film layer of less than 20 nm in thickness with a change optically detectable by a laser beam irradiation and a metal reflecting layer of less than 20 nm in thickness on a transparent substrate, further comprising the steps of:
a film forming process to form a film having a transmissivity of about 3 % or more in the ultraviolet ray sensitive wavelength range of a curable resin in the multi-layered structure film of at least one of the two optical information recording materials;
a positioning process to position the two optical information recording materials with the surface having the multi-layered film opposed to each other;
a filling process to fill the curable resin into a space provided between the opposing multi-layered structure films; and
an exposure process to cure the resin by the ultraviolet ray exposure.

5. The production process for an optical information recording medium according to claim 4, wherein the exposure is conducted from the both surfaces of the optical information recording materials.

6. The production process for an optical information recording medium according to claim 4 or 5, wherein the curing is conducted by energy line irradiation to the optical information recording medium after the exposure process.

7. The production process for an optical information recording medium according to claim 6, wherein the energy line is a laser beam.

8. The production process for an optical information recording medium according to claim 6, wherein the energy line is a flash light.

## Patentansprüche

1. Optische Informationen aufzeichnendes Medium, das aus zwei optische Informationen aufzeichnenden Materialien besteht, die jeweils einen mehrschichtigen Film umfassen, der zwei optische absorbierende Schichten umfaßt aus:
(i) einer aufzeichnenden Dünnfilmschicht mit einer Dicke von weniger als 20 nm, die einen Übergang aufweist, der durch eine Laserbestrahlung optisch erfaßt werden kann, und
(ii) einer metallischen reflektierenden Schicht mit einer Dicke von weniger als 20 nm auf einem transparenten Substrat,
die aneinander befestigt sind, wobei die mehrschichtigen Filme einander gegenüberliegen, und zwar mit Hilfe eines Harzes, das ein gegenüber einem Ultraviolettstrahl empfindliches zu härtendes Element enthält, wobei mindestens eines der beiden optische Informationen aufzeichnenden Materialien einen Transmissionsgrad von etwa 3% oder mehr im für Ultraviolettstrahlen empfindlichen Wellenlängenbereich des Harzes aufweist.

2. Optische Informationen aufzeichnendes Medium nach Anspruch 1, wobei die aufzeichnende Dünnfilmschicht die Änderung der optischen Charakteristiken entsprechend dem Phasenübergang zwischen der amorphen Phase und der kristallinen Phase ausnutzt, und wenn die aufzeichnende Dünnfilmschicht mindestens eines der beiden optische Informationen aufzeichnenden Materialien sich im amorphen Zustand befindet, der Transmissionsgrad im für Ultraviolettstrahlen empfindlichen Wellenlängenbereich des Harzes etwa 3% oder mehr beträgt.

3. Optische Informationen aufzeichnendes Medium nach Anspruch 1, wobei die metallische reflektierende Schicht eine Legierung Au₁₀₀₋ₓMₓ (M: metallisches Element, 100 > X ≥ 0) mit Au als der Hauptkomponente ist.

4. Produktionsprozeß für ein optische Informationen aufzeichnendes Medium mit einem Schritt des Anbringens zweier Stücke aus optische Informationen aufzeichnenden Materialien, die eine aufzeichnende Dünnfilmschicht mit einer Dicke von weniger als 20 nm, wobei eine Änderung durch eine Laserstrahlbestrahlung optisch erfaßt werden kann, und eine metallische reflektierende Schicht mit einer Dicke von weniger als 20 nm umfassen, auf einem transparenten Substrat, weiterhin mit den folgenden Schritten:
einem Filmausbildungsprozeß zum Ausbilden eines Films mit einem Transmissionsgrad von etwa 3% oder mehr im für Ultraviolettstrahlen empfindlichen Wellenlängenbereich eines härtbaren Harzes in dem eine mehrschichtige Struktur aufweisenden Film aus mindestens einem der beiden optische Informationen aufzeichnenden Materialien;
einem Positionierprozeß zum Positionieren der beiden optische Informationen aufzeichnenden Materialien mit der Oberfläche mit dem einander gegenüberliegenden mehrschichtigen Film;
einem Füllprozeß zum Einfüllen das härtbaren Harzes in einen zwischen den gegenüberliegenden, eine mehrschichtige Struktur aufweisenden Filmen vorgesehenen Raum; und
einem Belichtungsprozeß zum Härten des Harzes durch die Ultraviolettstrahlenbelichtung.

5. Produktionsprozeß für ein optische Informationen aufzeichnendes Medium nach Anspruch 4, wobei die Belichtung von den beiden Oberflächen der optische Informationen aufzeichnenden Materialien aus durchgeführt wird.

6. Produktionsprozeß für ein optische Informationen aufzeichnendes Medium nach Anspruch 4 oder 5, wobei das Härten durch Energielinienbestrahlung auf das optische Informationen aufzeichnende Medium nach dem Belichtungsprozeß durchgeführt wird.

7. Produktionsprozeß für ein optische Informationen aufzeichnendes Medium nach Anspruch 6, wobei die Energielinie ein Laserstrahl ist.

8. Produktionsprozeß für ein optische Informationen aufzeichnendes Medium nach Anspruch 6, wobei die Energielinie ein Blitzlicht ist.

## Revendications

1. Support d'enregistrement optique d'informations, comprenant deux matériaux d'enregistrement optique d'informations, chacun comprenant un film multicouche comprenant deux couches optiques absorbantes constituées
(i) d'une couche d'enregistrement à film mince d'une épaisseur inférieure à 20 nm présentant une transition susceptible d'être détectée optiquement par une irradiation laser, et
(ii) d'une couche métallique réfléchissante d'une épaisseur inférieure à 20 nm sur un substrat transparent,
fixées ensemble, les films multicouches étant mutuellement opposés au moyen d'une résine contenant un élément sensible à un rayon ultraviolet appelé à être durci, au moins un des deux matériaux d'enregistrement optique d'informations présentant une transmissivité d'environ 3 %, ou plus, dans la gamme de longueurs d'onde de la résine sensibles au rayon ultraviolet.

2. Support d'enregistrement optique d'informations selon la revendication 1, dans lequel la couche d'enregistrement à film mince fait appel au changement des caractéristiques optiques en fonction de la transition de phase entre la phase amorphe et la phase cristalline, et lorsque la couche d'enregistrement à film mince d'au moins un des deux matériaux d'enregistrement optique d'informations occupe l'état amorphe, la transmissivité dans la gamme de longueurs d'onde de la résine sensibles au rayon ultraviolet est d'environ 3 %, ou plus.

3. Support d'enregistrement optique d'informations selon la revendication 1, dans lequel la couche métallique réfléchissante est un alliage Au₁₀₀₋ₓMₓ (M : élément métallique, 100 > X ≥ 0), comprenant Au comme composant principal.

4. Processus de fabrication d'un support d'enregistrement optique d'informations, comprenant une étape de fixation de deux pièces de matériaux d'enregistrement optique d'informations comprenant une couche d'enregistrement à film mince d'une épaisseur inférieure à 20 nm avec une transition susceptible d'être détectée optiquement par une irradiation laser, et une couche métallique réfléchissante d'une épaisseur inférieure à 20 nm sur un substrat transparent, comprenant en outre les étapes de :
formation de film en vue de former un film présentant une transmissivité d'environ 3 %, ou plus, dans la gamme de longueurs d'onde d'une résine durcissable sensibles à un rayon ultraviolet, dans le film à structure multicouche d'au moins un des deux matériaux d'enregistrement optique d'informations ;
mise en place en vue de mettre en place les deux matériaux d'enregistrement optique d'informations, les surfaces comportant le film multicouche étant mutuellement opposées ;
remplissage en vue de remplir de résine durcissable un espace prévu entre les films à structure multicouche opposés ; et
exposition en vue de durcir la résine par exposition au rayon ultraviolet.

5. Processus de fabrication d'un support d'enregistrement optique d'informations selon la revendication 4, dans lequel l'exposition se fait à partir des deux surfaces des matériaux d'enregistrement optique d'informations.

6. Processus de fabrication d'un support d'enregistrement optique d'informations selon la revendication 4 ou 5, dans lequel le durcissement se fait par irradiation suivant une ligne d'énergie du support d'enregistrement optique d'informations suite à l'exposition.

7. Processus de fabrication d'un support d'enregistrement optique d'informations selon la revendication 6, dans lequel la ligne d'énergie est un faisceau laser.

8. Processus de fabrication d'un support d'enregistrement optique d'informations selon la revendication 6, dans lequel la ligne d'énergie est une lumière à éclairs.
